(19) Europäisches Patentamt
European Patent Office
Office européen des brevets

(11) **EP 3 556 807 A1**

(12) **EUROPEAN PATENT APPLICATION**
published in accordance with Art. 153(4) EPC

(43) Date of publication:
**23.10.2019 Bulletin 2019/43**

(51) Int Cl.:
*C08L 67/00* (2006.01)    *B29C 45/00* (2006.01)
*B29C 45/27* (2006.01)    *B62D 25/02* (2006.01)
*B62D 25/06* (2006.01)    *C08K 7/00* (2006.01)
*C08L 67/03* (2006.01)

(21) Application number: **17881959.5**

(22) Date of filing: **14.12.2017**

(86) International application number:
**PCT/JP2017/044880**

(87) International publication number:
**WO 2018/110642 (21.06.2018 Gazette 2018/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **15.12.2016 JP 2016243452**

(71) Applicant: **Sumitomo Chemical Company, Limited**
**Tokyo 104-8260 (JP)**

(72) Inventors:
• **KOMATSU, Shintaro**
  **Tsukuba-shi, Ibaraki 3050045 (JP)**
• **SAKAI, Taiga**
  **Tsukuba-shi**
  **Ibaraki 300-3294 (JP)**
• **MAEDA, Mitsuo**
  **Tokyo 104-8260 (JP)**

(74) Representative: **Vossius & Partner**
**Patentanwälte Rechtsanwälte mbB**
**Siebertstrasse 3**
**81675 München (DE)**

(54) **LIQUID-CRYSTAL POLYMER RESIN COMPOSITION FOR OUTER PLATE AND OUTER PLATE**

(57)    The present invention provides a liquid crystal polymer resin composition for an outer plate including a liquid crystal polymer and a plate-shaped filler, in which the amount of the plate-shaped filler is 20 parts by mass or more and 70 parts by mass or less with respect to 100 parts by mass of the liquid crystal polymer.

## FIG. 1

**Description**

Technical Field

The present invention relates to a liquid crystal polymer resin composition for an outer plate and an outer plate.
Priority is claimed on Japanese Patent Application No. 2016-243452, filed on December 15, 2016, the content of which is incorporated herein by reference.

Background Art

Molded bodies for which a liquid crystal polymer (liquid crystalline resin) is used as a forming material have a high strength, high heat resistance, and high dimensional accuracy. Therefore, liquid crystal polymers are used as a forming material of electronic components having a relatively small size such as connectors or relay components (for example, refer to Patent Document 1). Molded bodies for which a liquid crystal polymer is used as a forming material are molded by injection molding.

Citation List

Patent Literature

[Patent Document 1] Japanese Unexamined Patent Application, First Publication No. H07-126383

Summary of Invention

Technical Problem

In recent years, studies have been conducted regarding the use of liquid crystal polymers as a forming material of large-sized molded bodies demanding strength by taking advantage of the above-described characteristics of liquid crystal polymers.
As the "large-sized molded bodies", exterior components for electronic goods or vehicles (cars) are exemplary examples.
Hereinafter, exterior components for electronic goods or vehicles will be collectively referred to as "outer plates" in some cases.
The present invention has been made in consideration of the above-described circumstance, and an object of the present invention is to provide a new liquid crystal polymer resin composition for an outer plate. In addition, another object of the present invention is to provide an outer plate that is obtained using the liquid crystal polymer resin composition for an outer plate.

Solution to Problem

As a result of a variety of studies, the present inventors found that, in the case of using a liquid crystal polymer as a forming material of an outer plate, the above-described objects can be achieved by producing the liquid crystal polymer as a composition with a plate-shaped filler and completed the present invention.
In order to achieve the above-described object, the present invention employed the following.

[1] An aspect of the present invention provides a liquid crystal polymer resin composition for an outer plate including a liquid crystal polymer and a plate-shaped filler, in which the amount of the plate-shaped filler is 20 parts by mass or more and 70 parts by mass or less with respect to 100 parts by mass of the liquid crystal polymer.
[2] In the aspect of the aspect of the present invention, the liquid crystal polymer resin composition may be used for an outer plate in which a projected area of a maximum surface is 400 $cm^2$ or more.
[3] In the aspect of the aspect of the present invention, the liquid crystal polymer resin composition may be used for an outer plate in which an average thickness is 0.03 cm or more and 0.5 cm or less.
[4] In the aspect of the aspect of the present invention, the liquid crystal polymer resin composition may be used for an outer plate in which a ratio of a projected area of a maximum surface (unit: $cm^2$) to an average thickness (unit: cm) is 8,000 or more.
[5] Another aspect of the present invention provides an outer plate that is an injection-molded body for which the liquid crystal polymer resin composition for an outer plate is used as a forming material.
[6] Still another aspect of the present invention provides, as forming materials, an outer plate including a liquid crystal polymer and a plate-shaped filler, in which the amount of the plate-shaped filler is 20 parts by mass or more and 70 parts by mass or less with respect to 100 parts by mass of the liquid crystal polymer.

[7] In the aspect of the aspect of the present invention, a projected area of a maximum surface may be 400 cm$^2$ or more.

[8] In the aspect of the aspect of the present invention, an average thickness may be 0.03 cm or more and 0.5 cm or less.

[9] In the aspect of the aspect of the present invention, a ratio of a projected area of a maximum surface (unit: cm$^2$) to an average thickness (unit: cm) may be 8,000 or more.

[10] In the aspect of the aspect of the present invention, the outer plate may be a vehicle exterior component.

[11] In the aspect of the aspect of the present invention, the vehicle exterior component may be a car roof component.

Advantageous Effects of Invention

According to the present invention, it is possible to provide a new liquid crystal polymer resin composition for an outer plate. In addition, it is possible to provide an outer plate that is obtained using the liquid crystal polymer resin composition for an outer plate.

Brief Description of Drawings

FIG. 1 is a planar pattern diagram showing flows of a resin at the time of molding a rectangular outer plate.
FIG. 2 is a planar pattern diagram showing an outer plate manufacturing method of the present embodiment.
FIG. 3 is a schematic explanatory view of a mold that is preferably used for the manufacturing of an outer plate of the present embodiment.
FIG. 4 is a planar pattern diagram that shows the flow of a molten resin in the mold.
FIG. 5 is a planar pattern diagram that shows the flow of the molten resin in the mold.
FIG. 6 is a planar pattern diagram of the mold having sub gates.
FIG. 7 is a planar pattern diagram that shows the flow of the molten resin in the mold.
FIG. 8 is a pattern diagram showing a roof that is molded in an example.
FIG. 9 is a pattern diagram showing a location of a gate in the roof that is molded in the example.
FIG. 10 is a pattern diagram showing an evaluation location of the roof that is molded in the example.
FIG. 11 is a pattern diagram showing a PC chassis that is molded in an example.
FIG. 12 is a pattern diagram showing a location of a gate in the PC chassis that is molded in the example.
FIG. 13 is an arrow cross-sectional view in a direction of a line A-A in FIG. 12.
FIG. 14 is a pattern diagram showing an evaluation location of the PC chassis that is molded in the example.
FIG. 15 is a pattern diagram showing a jig for evaluation.
FIG. 16 is a pattern diagram showing an evaluation location of a damped free vibration waveform.
FIG. 17 is a view showing the damped free vibration waveform.

Description of Embodiments

[Liquid crystal polymer resin composition for outer plate]

A liquid crystal polymer resin composition for an outer plate according to an aspect of the present invention includes a liquid crystal polymer and a plate-shaped filler.

In the present embodiment, the "outer plate" refers to an exterior component for electronic goods or vehicles (cars). In the present embodiment, the liquid crystal polymer resin composition for an outer plate is used as a forming material of the outer plate. The liquid crystal polymer resin composition for an outer plate of the present embodiment is molded to an outer plate by injection molding.

The liquid crystal polymer resin composition for an outer plate of the present embodiment can be used as a forming material of large-sized outer plates having a maximum surface with a projected area of 400 cm$^2$ or more.

In addition, in the present specification, the "projected area" is used as an index that indicates the dimensions (sizes) of the outer plate. In a case where the outer plate has a complicated shape, the dimensions of the outer plate can be converted to and expressed as the projected area (unit: cm$^2$). More specifically, the "projected area" refers to the area of the shape of the outer plate formed on a planar surface (criterion surface) perpendicular to the normal direction to the upper surface of the outer plate when a parallel light ray is radiated onto the upper surface in the normal direction.

Here, the "maximum surface" refers to a surface that is determined as described below. First, the projected areas of a plurality of surfaces that forms the three-dimensional shape of the outer plate are obtained. In a case where the outer plate has a curved surface, normal lines to the curved surface are set in a plurality of directions; however, among the areas of shade formed when a parallel light ray is radiated in the normal direction with respect to the criterion surface perpendicular to each of the normal directions, the maximum area is regarded as the projected area of the curved surface.

Next, the areas of individual images are compared with each other, and the surface showing the maximum value is regarded as the "maximum surface". It is needless to say that the maximum surface can be visually determined in a case where the outer plate is a simple cuboid.

For outer plates that are formed using the liquid crystal polymer resin composition for an outer plate of the present embodiment, there is no upper limit for the projected area of the maximum surface. However, when the projected area of the maximum surface is 400 cm$^2$ or more, outer plates for tablet PCs or notebook PCs can be injection-molded, which is preferable.

The liquid crystal polymer resin composition for an outer plate of the present embodiment can be used as a forming material of outer plates having an average thickness of 0.03 cm or more and 0.5 cm or less.

Here, the "average thickness" refers to a value obtained by measuring the thickness of the outer plate at a plurality of points and computing the arithmetic average thereof. In addition, the "thickness" refers to a length from one surface to the other surface of the outer plate in the normal direction to a planar surface that is imaged to be in contact with a thickness measurement location in the outer plate. During the measurement of the thickness, a place which is provided with a specially different thickness in order to carry out a specific function such as, for example, a screw clamp is not selected as the measurement location. And the place is not an average structure that is intended to guarantee a function of the outer plate such a screw hole.

When outer plates that are molded using the liquid crystal polymer resin composition for an outer plate of the present embodiment have an average thickness of 0.03 cm or more, the outer plates are durable to external forces that can be imagined for outer plates, which is preferable.

In addition, during injection molding, as the thickness of an outer plate to be molded decreases, the injection pressure of a molten resin into a mold that is used to mold the outer plate increases. Therefore, as the thickness of an outer plate to be molded decreases, the clamp capability (a force that closes the mold) of a molder becomes more insufficient compared with the injection pressure, and there is a concern that the clamp capability may not be capable of withstanding the resin pressure during injection, the mold may be opened, and the thickness of a molded body may become thick. In the present embodiment, the average thickness of an outer plate that is molded using the liquid crystal polymer resin composition for an outer plate is preferably 0.03 cm or more since it is possible to suppress the resin pressure to be small enough for injection molding with the clamp capability of commercially available injection molders, which is preferable.

In addition, the average thickness of an outer plate is preferably 0.5 cm or less. Since the outer plate has a sufficient shape-holding force against external forces and has a weight that can be sufficiently reduced compared with the weight of an outer plate being formed using a metallic material, which is preferable.

The liquid crystal polymer resin composition for an outer plate of the present embodiment can be used as a forming material of outer plates in which the ratio of the projected area of the maximum surface (unit: cm$^2$) to the average thickness (unit: cm) is 8,000 or more.

In an outer plate that is molded using the liquid crystal polymer resin composition for an outer plate of the present embodiment, when the ratio of the projected area of the maximum surface to the average thickness is 8,000 or more, the orientation of molecular chains of the liquid crystal polymer in a flow direction is accelerated. As a result, the strength of the outer plate increases, and the outer plate does not easily warp. Furthermore, the plate-shaped filler that is included in the liquid crystal polymer resin composition for an outer plate is arranged in an in-plane direction of the outer plate. And thus it can be expected that a synergetic effect for suppressing the warping of the outer plate, which is preferable.

(Liquid crystal polymer)

The liquid crystal polymer that is used in the present embodiment has repeating units represented by General Formulae (1), (2), and (3) below.

(1)       -O-Ar$^1$-CO-

(2)       -CO-Ar$^2$-CO-

(3)       -X-Ar$^3$-Y-

(In the formulae, Ar$^1$ is a phenylene group, a naphthylene group, or a biphenylene group; Ar$^2$ and Ar$^3$ each are

independently a phenylene group, a naphthylene group, a biphenylene group, or a group represented by General Formula (4) below; X and Y each is independently an oxygen atom or an imino group; one or more hydrogen atoms in $Ar^1$, $Ar^2$, and $Ar^3$ each may be independently substituted with a halogen atom, an alkyl group, or an aryl group.)

(4)         $-Ar^4-Z-Ar^5-$

(In the formula, $Ar^4$ and $Ar^5$ each are independently a phenylene group or a naphthylene group; Z is an oxygen atom, a sulfur atom, a carbonyl group, a sulfonyl group, or an alkylidene group.)

In General Formulae (1) to (3), as the halogen atom capable of substituting for one or more hydrogen atoms in the groups represented by $Ar^1$, $Ar^2$, or $Ar^3$, a fluorine atom, a chlorine atom, a bromine atom, and an iodine atom are exemplary examples.

In General Formulae (1) to (3), as the alkyl group capable of substituting for one or more hydrogen atoms in the groups represented by $Ar^1$, $Ar^2$, or $Ar^3$, a methyl group, an ethyl group, an n-propyl group, an isopropyl group, an n-butyl group, an isobutyl group, a sec-butyl group, a tert-butyl group, an n-hexyl group, an n-heptyl group, a 2-ethylhexyl group, an n-octyl group, an n-nonyl group, an n-decyl group, and the like are exemplary examples. The number of carbon atoms in the alkyl group is preferably 1 to 10.

In General Formulae (1) to (3), as the aryl group capable of substituting for one or more hydrogen atoms in the groups represented by $Ar^1$, $Ar^2$, or $Ar^3$, monocyclic aromatic groups such as a phenyl group, an o-tolyl group, an m-tolyl group, and a p-tolyl group and fused-ring aromatic groups such as a 1-naphthyl and a 2-naphthyl group are exemplary examples. The number of carbon atoms in the aryl group is preferably 6 to 20.

In General Formulae (1) to (3), in a case where one or more hydrogen atoms in the group represented by $Ar^1$, $Ar^2$, or $Ar^3$ are substituted with the above-described groups, the number of hydrogen atoms substituted is preferably one or two and more preferably one in each of the groups represented by $Ar^1$, $Ar^2$, or $Ar^3$ independently.

In General Formula (4), examples of the alkylidene group include a methylene group, an ethylidene group, an isopropylidene group, an n-butylidene group, a 2-ethylhexylidene group, and the like. The number of carbon atoms in the alkylidene group is preferably 1 to 10.

As the repeating unit represented by General Formula (1), a repeating unit in which $Ar^1$ is a 1,4-phenylene group (a repeating unit derived from p-hydroxybenzoic acid) and a repeating unit in which $Ar^1$ is a 2,6-naphthylene group (a repeating unit derived from 6-hydroxy-2-naphthoic acid) are preferable, and a repeating unit in which $Ar^1$ is a 2,6-naphthylene group is more preferable.

In the present specification, "derivation" refers to the fact that a raw material monomer changes in the chemical structure only for polymerization and does not change in any other structures.

As a monomer that forms the repeating unit represented by General Formula (1), 2-hydroxy-6-naphthoic acid, p-hydroxybenzoic acid, and 4-(4-hydroxyphenyl)benzoic acid are exemplary examples. Furthermore, as the monomer that forms the repeating unit represented by General Formula (1), monomers having a benzene ring or a naphthalene ring in which a hydrogen atom is substituted with a halogen atom or an alkyl group or aryl group having 1 to 10 carbon atoms are also exemplary examples. Furthermore, these monomers may be converted to an ester-forming derivative described below and then used as the monomer that forms the repeating unit represented by General Formula (1).

As the repeating unit represented by General Formula (2), a repeating unit in which $Ar^2$ is a 1,4-phenylene group (a repeating unit derived from terephthalic acid), a repeating unit in which $Ar^2$ is a 1,3-phenylene group (a repeating unit derived from isophthalic acid), a repeating unit in which $Ar^2$ is a 2,6-naphthylene group (a repeating unit derived from 2,6-naphthalenedicarboxylic acid), and a repeating unit in which $Ar^2$ is a diphenyl ether-4,4'-diyl group (a repeating unit derived from diphenyl ether-4,4'-dicarboxylic acid) are preferable. Furthermore, as the repeating unit represented by General Formula (2), a repeating unit in which $Ar^2$ is a 1,4-phenylene group and a repeating unit in which $Ar^2$ is a 1,3-phenylene group are more preferable.

As a monomer that forms the repeating unit represented by General Formula (2), 2,6-naphthalenedicarboxylic acid, terephthalic acid, isophthalic acid, or biphenyl-4,4'-dicarboxylic acid is an exemplary example. Furthermore, as the monomer that forms the repeating unit represented by General Formula (2), monomers having a benzene ring or a naphthalene ring in which a hydrogen atom is substituted with a halogen atom or an alkyl group or aryl group having 1 to 10 carbon atoms are also exemplary examples. Furthermore, these monomers may be converted to an ester-forming derivative described below and then used as the monomer that forms the repeating unit represented by General Formula (2).

As a monomer that forms the repeating unit represented by General Formula (3), a repeating unit in which $Ar^3$ is a 1,4-phenylene group (a repeating unit derived from hydroquinone, p-aminophenol, or p-phenylenediamine) and a repeating unit in which $Ar^3$ is a 4,4'-biphenylene group (a repeating unit derived from 4,4'-hydroxybiphenyl, 4-amino-4'-hydroxybiphenyl, or 4,4'-diaminobiphenyl) are preferable.

As the monomer that forms the repeating unit represented by General Formula (3), 2,6-naphthol, hydroquinone, resorcinol, and 4,4'-hydroxybiphenyl are exemplary examples. Furthermore, as the monomer that forms the repeating unit represented by General Formula (3), monomers having a benzene ring or a naphthalene ring in which a hydrogen atom is substituted with a halogen atom or an alkyl group or aryl group having 1 to 10 carbon atoms are also exemplary examples. Furthermore, these monomers may be converted to an ester-forming derivative described below and then used as the monomer that forms the repeating unit represented by General Formula (3).

As the monomer that forms the repeating unit represented by Formula (1), (2), or (3), an ester-forming derivative is preferably used in order to facilitate polymerization in a process for manufacturing a polyester. The ester-forming derivative refers to a monomer having a group that accelerates an ester-generating reaction. Specific examples thereof include highly reactive derivatives such as an ester-forming derivative in which a carboxylic acid group in the monomer molecule is converted to an acid halide or an acid anhydride or an ester-forming derivative in which a hydroxyl group in the monomer molecule is converted to a lower carboxylic acid ester group.

The amount of the repeating unit (1) in the liquid crystal polymer is preferably 30 mol% or more, more preferably 30 mol% or more and 80 mol% or less, still more preferably 40 mol% or more and 70 mol% or less, and particularly preferably 45 mol% or more and 65 mol% or less with respect to the total amount (100 mol%) of the repeating unit (1), the repeating unit (2), and the repeating unit (3).

The amount of the repeating unit (2) in the liquid crystal polymer is preferably 35 mol% or more, more preferably 10 mol% or more and 35 mol% or less, still more preferably 15 mol% or more and 30 mol% or less, and particularly preferably 17.5 mol% or more and 27.5 mol% or less with respect to the total amount (100 mol%) of the repeating unit (1), the repeating unit (2), and the repeating unit (3).

The amount of the repeating unit (3) in the liquid crystal polymer is preferably 35 mol% or more, more preferably 10 mol% or more and 35 mol% or less, still more preferably 15 mol% or more and 30 mol% or less, and particularly preferably 17.5 mol% or more and 27.5 mol% or less with respect to the total amount (100 mol%) of the repeating unit (1), the repeating unit (2), and the repeating unit (3).

That is, in the liquid crystal polymer, when the total of the repeating unit (1), the repeating unit (2), and the repeating unit (3) is set to 100 mol%, it is preferable that the content ratio of the repeating unit (1) is 30 mol% or more and 80 mol% or less, the repeating unit (2) is 10 mol% or more and 35 mol% or less, and the repeating unit (3) is 10 mol% or more and 35 mol% or less.

When the amount of the repeating unit (1) is in the above-described range, the liquid crystal polymer is likely to improve in melt fluidity, heat resistance, strength, and hardness.

In the liquid crystal polymer, the ratio of the amount of the repeating unit (2) to the amount of the repeating unit (3) is indicated by [the amount of the repeating unit (2)]/[the amount of the repeating unit (3)] (mol/mol) and is preferably 0.9/1 to 1/0.9, more preferably 0.95/1 to 1/0.95, and still more preferably 0.98/1 to 1/0.98.

The liquid crystal polymer respectively has repeating units including a 2,6-naphtylene group as the repeating unit (1), the repeating unit (2), and the repeating unit (3).

In addition, in the liquid crystal polymer, the amount of the repeating units including a 2,6-naphtylene group is 40 mol% or more with respect to the total (100 mol%) of all of the repeating units. When the amount of the repeating units including a 2,6-naphtylene group is 40 mol% or more, a liquid crystal polymer resin composition to be obtained becomes more favorable in fluidity during a melting process and becomes more suitable to a process of an electronic device chassis having a fine grid structure.

The number of each of the repeating units (1) to (3) in the liquid crystal polymer may be one or more independently. In addition, the liquid crystal polymer may have one or more repeating units other than the repeating units (1) to (3), and the amount thereof is preferably 0 mol% or more and 10 mol% or less and more preferably 0 mol% or more and 5 mol% or less of the total of all of the repeating units.

The liquid crystal polymer preferably has, as the repeating unit (3), a repeating unit in which X and Y each are an oxygen atom, that is, a repeating unit derived from a predetermined aromatic diol since the melt viscosity becomes low. In addition, the liquid crystal polymer more preferably has, as the repeating unit (3), only a repeating unit in which X and Y each are an oxygen atom.

The liquid crystal polymer is preferably manufactured by melt-polymerizing a raw material monomer that corresponds to the repeating unit configuring the liquid crystal polymer and solid-phase-polymerizing the obtained polymerized substance (prepolymer). In such a case, it is possible to manufacture a liquid crystal polymer that is favorable in terms of heat resistance, strength, and stiffness and has a high molecular weight with favorable operability. The melt polymerization may be carried out in the presence of a catalyst. As examples of the catalyst, metal compounds such as magnesium acetate, tin diacetate, tetrabutyl titanate, lead acetate, sodium acetate, and ammonium trioxide or nitrogen-containing heterocyclic compounds such as N,N-dimethylaminopyridine and N-methylimidazole are exemplary examples. As the catalyst that is used during the melt polymerization, a nitrogen-containing heterocyclic compound is preferable.

The flow-starting temperature of the liquid crystal polymer is preferably 270°C or higher, more preferably 270°C or higher and 400°C or lower, and still more preferably 280°C or higher and 380°C or lower. The liquid crystal polymer is more likely to improve in heat resistance, strength, and stiffness as the flow-starting temperature increases. However, when the flow-starting temperature of the liquid crystal polymer is too high, a high temperature is required to melt the liquid crystal polymer, and thus the liquid crystal polymer is likely to thermally deteriorate during molding or the viscosity increases during melting and thus the fluidity degrades.

The flow-starting temperature is also referred to as the flow temperature and is a temperature at which the liquid crystal polymer exhibits a viscosity of 4,800 Pa·s (48,000 poise) when melted while increasing the temperature at a rate of 4°C/minute under a load of 9.8 MPa (100 kgf/cm$^2$) and extracted from a nozzle having an inner diameter of 1 mm and a length of 10 mm using a capillary rheometer. The flow-starting temperature of the liquid crystal polymer serves as a rough indication of the molecular weight of the liquid crystal polymer (refer to Koide Naoyuki's "Synthesis, molding, and application of liquid crystal polymers", CMC Publishing Co., Ltd., June 5, 1987, p. 95).

In the liquid crystal polymer resin composition for an outer plate of the present embodiment, only one liquid crystal polymer may be used singly or two or more liquid crystal polymers may be jointly used.

(Plate-shaped filler)

The liquid crystal polymer resin composition for an outer plate in the present invention includes 20 parts by mass or more and 70 parts by mass or less of the plate-shaped filler with respect to 100 parts by mass of the liquid crystal polymer. The liquid crystal polymer resin composition for an outer plate including the plate-shaped filler in the above-described range exhibits favorable fluidity at the time of forming an outer plate by injection molding. Therefore, the liquid crystal polymer resin composition for an outer plate in the present embodiment can be preferably used to manufacture outer plates that are film and demand injection molding in a broad range.

In addition, compared with a fibrous filler or a particulate filler that is likely to be orientated in the flow direction at the time of causing the molten resin to flow, the plate-shaped filler is not easily oriented at the time of causing the molten resin to flow, and the flow of the resin is likely to be locally hindered. Therefore, at the time of injection molding using the liquid crystal polymer resin composition for an outer plate in the present embodiment, the flow of the molten resin is disarrayed in the vicinity of the plate-shaped filler. Therefore, the liquid crystal polymer is not easily oriented in the flow direction of the molten resin, and there is a tendency that the warping of the molded body attributed to the orientation of the resin does not easily appear.

As the plate-shaped filler, talc, mica, graphite, wollastonite, barium sulfate, calcium carbonate, and the like are exemplary examples. The mica may be white mica, may be phlogopite, may be fluorine phlogopite, or may be tetrasilisic mica.

In the liquid crystal polymer resin composition for an outer plate of the present embodiment, the amount of the plate-shaped filler is preferably 25 parts by mass or more with respect to 100 parts by mass of the liquid crystal polymer. In addition, in a liquid crystal polymer resin composition for an outer plate of the present embodiment, the amount of the plate-shaped filler is preferably 50 parts by mass or less and more preferably 35 parts by mass or less with respect to 100 parts by mass of the liquid crystal polymer.

The upper limit value and the lower limit value of the amount of the plate-shaped filler can be arbitrarily combined.

(Other components)

The liquid crystal polymer resin composition for an outer plate in the present embodiment may contain other components that correspond to neither the liquid crystal polymer nor the plate-shaped filler as long as the effect of the present invention is not impaired.

As examples of the other components, a filler other than the plate-shaped filler, an additive, a resin other than the liquid crystal polymer, and the like are exemplary examples.

These other components may be used singly or two or more other components may be jointly used.

The filler other than the plate-shaped filler may be a fibrous filler or a particulate filler.

In addition, the filler other than the plate-shaped filler may be an inorganic filler or an organic filler.

As examples of the fibrous inorganic filler, glass fibers; carbon fibers such as PAN-based carbon fibers and pitch-based carbon fibers; ceramic fibers such as silica fibers, alumina fibers, and silica alumina fibers; and metal fibers such as stainless steel fibers. In addition, whiskers such as potassium titanate whiskers, barium titanate whiskers, wollastonite whiskers, aluminum borate whisker, silicon nitride whiskers, and silicon carbide whiskers are also exemplary examples.

As examples of the glass fibers, glass fibers manufactured using a variety of methods such as chopped glass fibers and milled glass fibers are exemplary examples.

As examples of the carbon fibers, PAN-based carbon fibers for which polyacrylonitrile is used as a raw material, pitch-based carbon fibers for which coal tar and petroleum pitch is used as a raw material, cellulose-based carbon fibers for which viscose rayon, cellulose acetate, or the like is used as a raw material, vapor-grown carbon fibers for which a hydrocarbon or the like is used as a raw material are exemplary examples. The carbon fiber may be a chopped carbon fiber or a milled carbon fiber.

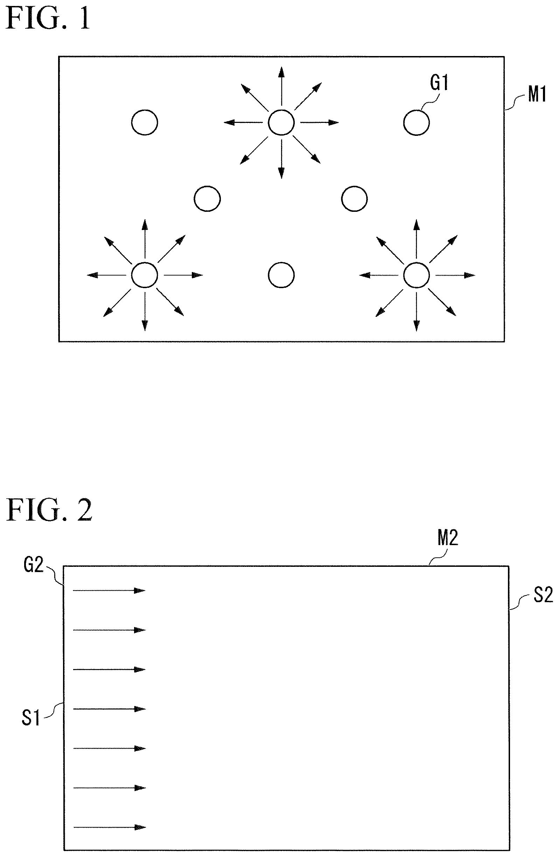

In the present embodiment, in a case where the liquid crystal polymer resin composition for an outer plate includes the fibrous filler, the amount of the fibrous filler is preferably more than 0 parts by mass and 10 parts by mass or less with respect to 100 parts by mass of the liquid crystal polymer. When the amount of the fibrous filler is 10 parts by mass or less, there is a tendency that the degree of warping of an outer plate to be formed decreases. In addition, the liquid crystal polymer resin composition for an outer plate has sufficiently high fluidity in a planar direction and thus can be preferably used in an outer plate manufacturing method described below and shown in FIG. 2.

As examples of the particulate inorganic filler, silica, alumina, titanium oxide, boron nitride, silicon carbide, calcium carbonate, and the like are exemplary examples.

As examples of the additive, a measuring stabilizer, a mold release agent, an antioxidant, a thermal stabilizer, an ultraviolet absorber, an antistatic agent, a surfactant, a flame retardant, and a colorant are exemplary examples.

As examples of the resin other than the liquid crystal polymer, thermoplastic resins other than the liquid crystal polymer such as polypropylene, polyamides, polyesters, polyphenylene sulfide, polyether ketone, polycarbonate, polyphenylene ether, polyetherimide, and fluorine resins; and thermosetting resins such as phenolic resins, epoxy resins, polyimide resins, and cyanate resins are exemplary examples.

The liquid crystal polymer resin composition for an outer plate of the present embodiment can be manufactured by mixing the liquid crystal polymer, the plate-shaped filler, and the other components that are used as necessary at the same time or in an appropriate order.

The liquid crystal polymer resin composition for an outer plate of the present embodiment is preferably a liquid crystal polymer resin composition for an outer plate that is pelletized by melting and kneading the liquid crystal polymer, the plate-shaped filler, and the other components that are used as necessary using an extruder.

[Outer plate]

An outer plate of the present embodiment is an injection molded body for which the liquid crystal polymer resin composition for an outer plate is used as a forming material. As the outer plate of the present embodiment, vehicle exterior components and chassis of electronic goods are exemplary examples. As the vehicle exterior components, car roof components are exemplary examples. As the chassis of electronic goods, a chassis of home appliances or an electronic device chassis are exemplary examples.

In the automotive field, studies are underway regarding weight reduction for the purpose of gas mileage improvement, and the substitution of bonnets, roofs, and the like into resinous components is being studied. In a case where a metal component is substituted with a resinous component, weight can be reduced, but rain sounds are felt loud when rain drops hit the resinous component during rain, which is likely to cause a problem. Therefore, for resinous vehicle exterior components known in the related art, for example, a configuration in which a non-woven fabric is attached to the indoor side of a vehicle to absorb sounds is known.

In contrast, the outer plate manufactured using the liquid crystal polymer resin composition for an outer plate of the present embodiment has an excellent sound absorption property.

From the above-described viewpoint, in a case where the outer plate of the present embodiment is a vehicle exterior component and the vehicle exterior component is a component having a portion that becomes substantially horizontal with respect to the ground surface such as a bonnet or a roof, a rain sound absorption effect is strongly felt, which is preferable.

In addition, when an outer plate (exterior component) molded using the plate-shaped molded body that is manufactured using the liquid crystal polymer resin composition for an outer plate of the present embodiment is used as an electronic goods, the vibration sounds of a motor or the wind sounds of a fan that is stored in the electronic goods are easily absorbed, which is preferable.

The outer plate of the present embodiment is preferably a large-sized outer plate in which the projected area of the maximum surface is 400 $cm^2$ or more.

The outer plate of the present embodiment preferably has an average thickness of 0.03 cm or more and 0.5 cm or less.

In the outer plate of the present embodiment, the ratio of the projected area of the maximum surface (unit: $cm^2$) to the average thickness (unit: cm) is preferably 8,000 or more.

The outer plate of the present embodiment preferably has a deflection temperature under load (DTUL) of 200°C or higher and lower than 260°C. When DTUL of the outer plate is 200°C or higher, in the case of applying a powder coating step after molding, the outer plate does not easily deform in the powder coating step. In addition, when DTUL of the outer plate is 200°C or higher, DTUL is sufficiently higher than a practical use temperature range, and the outer plate does not easily deform during practical use, which is preferable.

In addition, in a case where DTUL of the outer plate reaches lower than 260°C, there is a tendency that the fluidity of an ordinarily-used liquid crystal polymer resin composition is excellent. Therefore, thin and large molded bodies are easily manufactured.

As DTUL in the present embodiment, a value obtained by measuring DTUL of a test specimen obtained by pelletizing the liquid crystal polymer resin composition for an outer plate, then, drying the pellets, and injection-molding the pellets using a PS40E-5ASE-type injection molding machine manufactured by Nissei Plastic Industrial Co., Ltd. at a load of 1.82 MPa according to ASTM D 648 was employed. The test specimen was 127 mm in length, 12.7 mm in width, and 6.4 mm in thickness.

[Outer plate manufacturing method]

The outer plate of the present embodiment is manufactured by injection-molding the liquid crystal polymer resin composition for an outer plate of the present embodiment.

FIG. 2 is a planar pattern diagram showing the outer plate manufacturing method of the present embodiment and a planar pattern diagram showing flows of a resin at the time of molding a rectangular outer plate.

As shown in the drawing, in the outer plate manufacturing method of the present embodiment, a gate G2 is set throughout an entire region of a side S1 of a mold M2 in a planar view. In addition, in the outer plate manufacturing method of the present embodiment, the molten resin is caused to flow from the gate G2 to a side S2 that is opposite to the side S1. Therefore, a flow direction of the molten resin becomes a uniform direction from the gate G2 toward the side S2. In the molten resin that flows as described above, the orientation direction of the liquid crystal polymer becomes a uniform direction.

Furthermore, in the outer plate manufacturing method of the present embodiment, it is formed a state in which the residence of the molten resin is suppressed until the mold M2 is fully filled with the molten resin. And it is formed a state in which the molten resin flows, in the flow direction of the resin, from the side S1 to the opposite side S2 of the mold M2 at all times.

Therefore, in an outer plate to be obtained, the orientation direction of the liquid crystal polymer becomes a uniform direction, and an internal stress generation direction is controlled to be uniform. As a result, in outer plates to be manufactured using the outer plate manufacturing method of the present embodiment, warping is reduced.

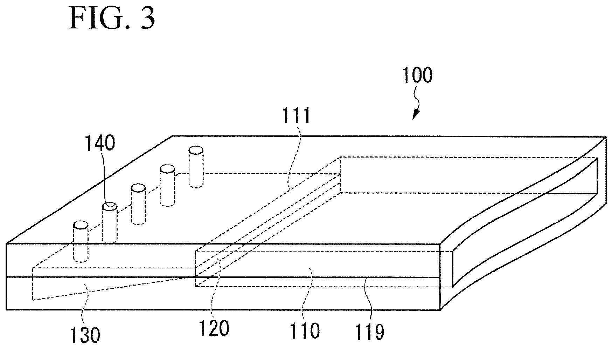

FIG. 3 is a schematic explanatory view of a mold that is preferably used for the manufacturing of the outer plate of the present embodiment. A mold 100 shown in FIG. 3 has a cavity 110, a gate 120, a runner 130, and sprues 140.

The cavity 110 is a space corresponding to an outer plate to be molded. In detail, the cavity 110 is a space surrounded by an inner wall of the mold 100. The inner wall of the mold 100 has a shape that is complementary to an outer form of the outer plate to be molded. In the outer plate manufacturing method of the present embodiment, when the molten resin that has flowed into the cavity 110 solidifies in the cavity 110, the shape of the inner wall of the mold 100 in contact with the cavity 110 is transferred, and an outer plate having an outer form with a shape complementary to the shape of the inner wall is obtained.

In the drawing, the cavity 110 is shown to have an approximately rectangular shape in a planar view. The outer plate molded in the cavity 110 can be removed by, for example, dividing the mold 100 into two (upper and lower) parts along a parting line 119.

The gate 120 is provided along approximately the entire width of a side 111 of the cavity 110. The gate 120 needs to be provided at a location at which the flow distance in the cavity 110 of the molten resin that flows into the cavity 110 through the gate 120 becomes short.

The gate 120 needs to be provided at a side that becomes longest in the planar-view shape of the cavity 110. "The planar-view shape of the cavity 110" is identical to the projected shape of the outer plate to be molded.

For example, in a case where the planar-view shape of the cavity 110 is rectangular, it is necessary to provide the gate 120 along a long side and cause the molten resin to flow in a short-side direction in the mold. When the gate 120 is provided at the above-described location, the flow distance of the molten resin becomes short.

In addition, in a case where there is no side formed of a straight line in the planar-view shape of the cavity 110, the gate 120 needs to be provided at a side that is as close to a straight line as possible. When the gate 120 is provided at the above-described location, the flow directions of the molten resin become similar, and the orientation directions of the resin cured in the cavity are likely to become similar.

The runner 130 is provided across the entire area of the gate 120 along an extension direction of the gate 120 and is connected to the gate 120. The inside space of the runner 130 has a wedge-shaped portion in which the width gradually decreases toward the gate 120 in a cross section perpendicular to an extension direction of the runner 130. The thinnest portion of the runner 130 is a portion that is connected to the gate 120.

The sprues 140 are provided at a plurality of places along the extension direction of the runner 130. The extension direction of the runner 130 is identical to the extension direction of the gate 120. As shown in the drawing, a direction in which the resin flows into the runner 130 from the sprues 140 and a direction in which the resin flows into the cavity 110 from the runner 130 need to intersect with each other. From the respective sprues 140, the molten resin that has been melted in an injection molding machine, not shown, flows in. The molten resin flows into the runner 130 through the respective sprues 140.

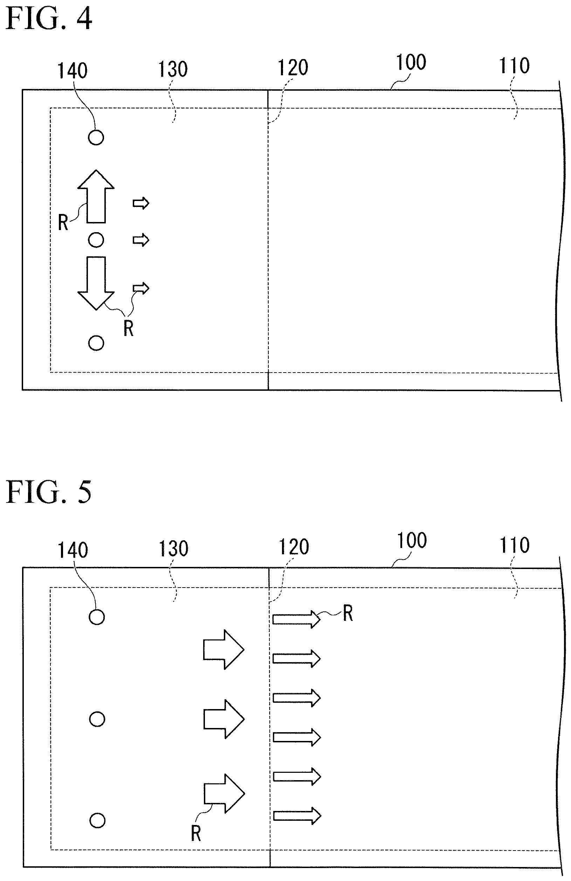

FIGS. 4 and 5 are planar pattern diagrams that show the flow of the molten resin at the time of injecting the molten resin into the mold 100. In the drawing, white arrows represented by a reference sign R indicate the flowing molten resin. The sizes of the white arrows indicate the flow amounts of the flowing resin, and a larger white arrow indicates a larger flow amount.

In the case of manufacturing a molded body using the mold 100, a molten resin R that is injected into the mold 100 from the injection molding machine flows as described below.

First, as shown in FIG. 4, the molten resin R injected from the plurality of sprues 140 spreads into the inside of the runner 130. At this time, the inside space of the runner 130 is designed to have a width that gradually decreases in a wedge shape and a pressure loss that gradually increases. Therefore, the molten resin R flows in a direction in which the pressure loss is smaller. That is, the molten resin R, first, flows in the extension direction of the gate 120 while filling the runner 130 instead of flowing toward the gate 120.

In the following description, a direction from the sprues 140 toward the gate 120 will be simply referred to as "the gate direction" in some cases.

The present inventors found through studies that, in runners that are connected to ordinarily-known film gates, a portion in which the molten resin injected into the runner stops is likely to be generated, the molten resin solidifies in the runner, and poor molding is likely to be caused. What has been described above will be described below.

In an ordinarily-used film gate, the runner does not have a wedge shape. Therefore, the molten resin that flows in the gate direction receives an abrupt pressure loss when flowing into the gate from the runner. Therefore, in the case of using the film gate, first, the molten resin flows in the extension direction of the runner, and the flow of the molten resin in the gate direction is likely to stop.

However, the melt viscosity of the liquid crystal polymer highly relies on the shear velocity. Therefore, when the flow velocity of the molten resin decreases and the shear velocity decreases, the melt viscosity of the molten resin of the liquid crystal polymer abruptly increases, and the reflow of the molten resin becomes extremely difficult. In a region in which the flow of the resin stops as described above, the solidification of the resin is accelerated. Therefore, when the flow velocity of the molten resin in the gate direction decreases in the case of using the film gate, the solidification of the resin is accelerated along the gate, and the resin does not flow in the gate direction.

On the other hand, in the runner 130 of the mold 100 that is used in the present embodiment, the sprues 140 are formed in a direction that intersects with both the extension direction of the gate 120 and the gate direction. Therefore, the molten resin injected from the sprues 140, first, flows to evenly spread both in the extension direction of the gate 120 and the gate direction in the runner 130.

The runner 130 of the mold 100 that is used in the present embodiment has a wedge shape in which the width of the inside space gradually decreases toward the gate 120. Therefore, the pressure loss that the molten resin flowing in the gate direction receives gradually increases as the width of the inside space decreases. As described above, the molten resin that flows in the gate direction in the runner 130 does not reach the gate 120 within a short period of time; however, instead, the flow does not easily stop. Therefore, in the runner 130, the resin does not easily solidify during the injection of the molten resin, and the flow of the resin in the gate direction is maintained.

Until the inside space of the runner 130 is filled with the molten resin R, in the inside of the runner 130, there is a place in which the pressure loss becomes smaller so that the molten resin R does not pass through the gate 120. Therefore, the molten resin R is not injected into the cavity 110 from the gate 120 until the runner 130 is filled.

After that, as shown in FIG. 5, when the inside of the runner 130 is filled with the molten resin R, the molten resin R is injected into the cavity 110 at the same time from the entire region of the gate 120. Therefore, in the cavity 110, the orientation direction of the molten resin R is likely to be determined in one direction, and it becomes easy to mold an outer plate in a state in which warping is reduced.

In a case where an outer plate to be molded has a large size, generally, the molten resin is injected from a plurality of gates that is communicated with the cavity 110. In contrast, in the outer plate manufacturing method of the present embodiment, the molten resin R is injected from the gate 120 provided at one end of the cavity 110, and the molten resin R is caused to flow in one direction. Therefore, in a case where an outer plate to be molded has a large size, there is a concern that the molten resin R may be cooled and solidified until the front end (the front end portion in the flow direction) of the molten resin R that flows in the cavity 110 reaches the end portion of the cavity 110.

In such a case, the molten resin R needs to be injected from a dot-shaped sub gate that is communicated with the cavity 110 using a mold having the sub gate.

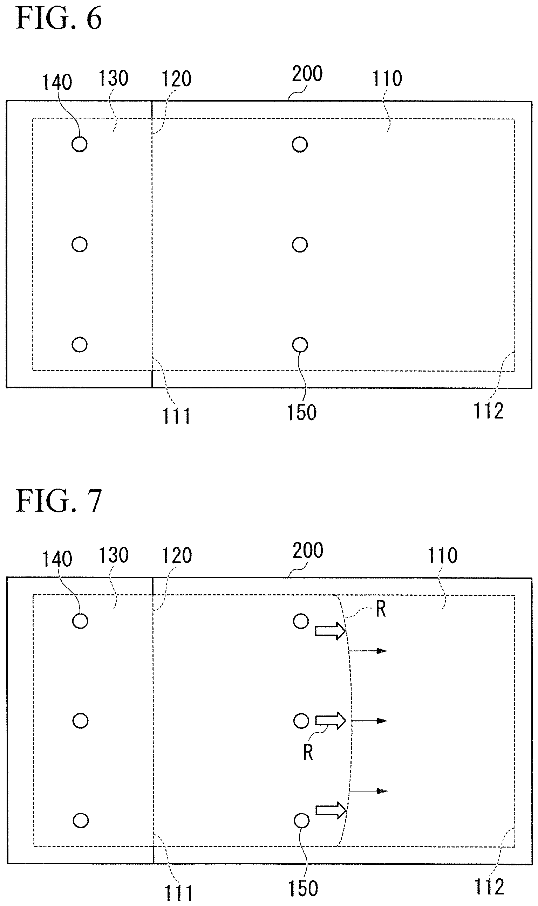

FIG. 6 is a planar pattern diagram of a mold 200 having sub gates 150.

As shown in FIG. 6, the mold 200 has a plurality of sub gates 150 that is communicated with the cavity 110. The sub gates 150 are provided to be arrayed in the same direction as the extension direction of the gate 120 between the side 111 provided with the gate 120 and an opposite side 112. The sub gates 150 may also be provided in a plurality of rows in the same array direction.

In the case of molding an outer plate using the above-described mold 200, it is necessary to begin the injection of the molten resin R from the sub gates 150 after the front end of the molten resin R that has been injected into the mold 200 from the sprues 140 passes through the location of the sub gates 150 in a planar view as shown in FIG. 7. The molten resin R that is injected from the gate 120 forms a flow of the resin from the side 111 toward the side 112. Therefore, the molten resin R that is injected from the sub gates 150 also flows to the opposite side 112 in accordance with the flow of the molten resin that is injected from the gate 120. Therefore, the orientation of the molten resin R is not easily disarrayed, and warping is reduced at the time of molding a large-sized outer plate.

When an outer plate is manufactured using the above-described manufacturing method and the liquid crystal polymer resin composition for an outer plate according to the present embodiment, the plate-shaped filler that is included in the liquid crystal polymer resin composition for an outer plate suppresses the orientation of the resin, and the molten resin flows in one direction, and thus irregular orientations are suppressed. Therefore, according to the outer plate manufacturing method of the present embodiment, it is possible to manufacture an outer plate in which warping is reduced.

According to the liquid crystal polymer resin composition for an outer plate having the above-described configuration, it is possible to provide a new composition capable of favorably reducing the warping of an outer plate to be obtained.

According to the outer plate having the above-described configuration, the outer plate is obtained using the above-described liquid crystal polymer resin composition for an outer plate, and the warping of the outer plate is reduced.

Hitherto, examples of the preferred embodiment according to the present invention have been described with reference to the accompanying drawings, but it is needless to say that the present invention is not limited to such examples. A variety of shapes, combinations, and the like of the respective configurational members described in the above-described examples are simply examples and can be modified in various manners on the basis of design requirements and the like within the scope of the gist of the present invention.

Examples

Hereinafter, the present invention will be described using examples, but the present invention is not limited to these examples.

In the following examples, the following commercially available liquid crystal polyesters (liquid crystal polymers) were used as the liquid crystal polymer.

Resin 1: RB100 (manufactured by Sumitomo Chemical Co., Ltd., flow-starting temperature: 333°C)
Resin 2: S6000 (manufactured by Sumitomo Chemical Co., Ltd., flow-starting temperature: 330°C)
Resin 3: S7000 (manufactured by Sumitomo Chemical Co., Ltd., flow-starting temperature: 286°C)

The flow-starting temperature of the liquid crystal polyester is also referred to as the flow temperature and is a temperature at which the liquid crystal polyester exhibits a viscosity of 4,800 Pa·s (48,000 poise) when melted while increasing the temperature at a rate of 4°C/minute under a load of 9.8 MPa (100 kgf/cm$^2$) and extracted from a nozzle having an inner diameter of 1 mm and a length of 10 mm using a capillary rheometer. The flow-starting temperature of the liquid crystal polymer serves as a rough indication of the molecular weight of the liquid crystal polymer (refer to Koide Naoyuki's "Synthesis, molding, and application of liquid crystal polymers", CMC Publishing Co., Ltd., June 5, 1987, p. 95).

In the present embodiment, as the flow-starting temperature, a value measured using the above-described measurement method was employed.

In addition, in the following examples, the following raw materials were used.

Plate-shaped filler: Mica (AB-25S, manufactured by Yamaguchi Mica Co., Ltd., volume-average particle diameter: 21 $\mu$m)
Fibrous filler 1: Glass fiber (CS3J260S, manufactured by Nitto Boseki Co., Ltd., number-average fiber length: 3 mm, number-average fiber diameter: 10 $\mu$m)
Fibrous filler 2: Carbon fiber (TR06UB4E, manufactured by Mitsubishi Rayon Co., Ltd., number-average fiber diameter: 7 $\mu$m, number-average fiber length: 6 mm)

<Level 1>

(Examples 1 and 2 and Comparative Example 1)

Liquid crystal polymer resin compositions for an outer plate obtained by mixing the liquid crystal polyester, the plate-shaped filler, and the fibrous filler in proportions shown in Table 1 below were supplied to a co-rotating twin screw extruder having a screw diameter of 30 mm ("PCM-30HS" manufactured by Ikegai Corp) and pelletized by melting and kneading, thereby obtaining pellets of liquid crystal polyester compositions for an outer plate of Examples 1 and 2 and Comparative Example 1. The units of numerical values in the table are "parts by mass".

[Table 1]

|  | Example 1 | Example 2 | Comparative Example 1 |
|---|---|---|---|
| Resin 1 (RB100) | - | 20 | - |
| Resin 2 (S6000) | 55 | 44 | 100 |
| Resin 3 (S7000) | 45 | 36 | - |
| Plate-shaped filler (mica) | 33 | 36 | - |
| Fibrous filler 1 (glass fiber) | - | 7 | 43 |

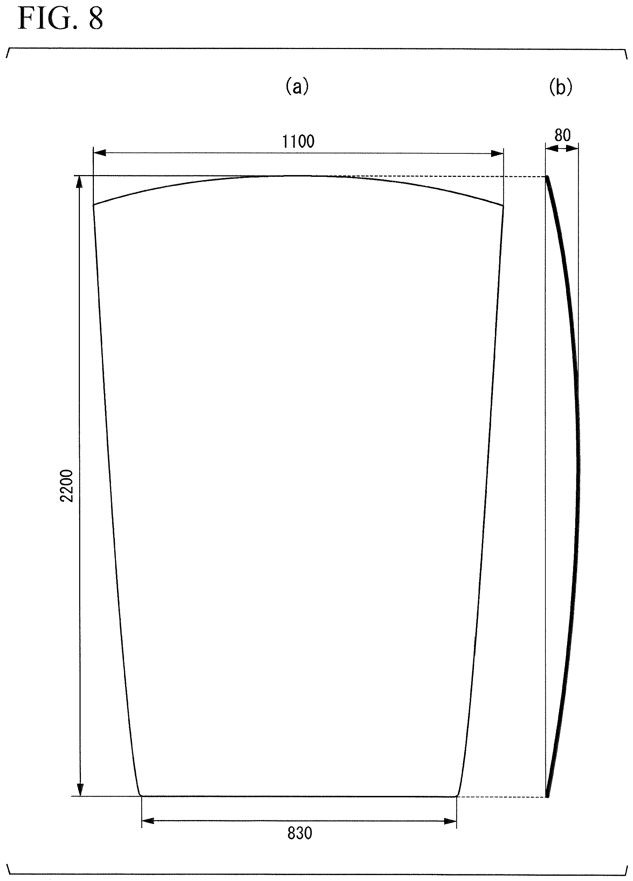

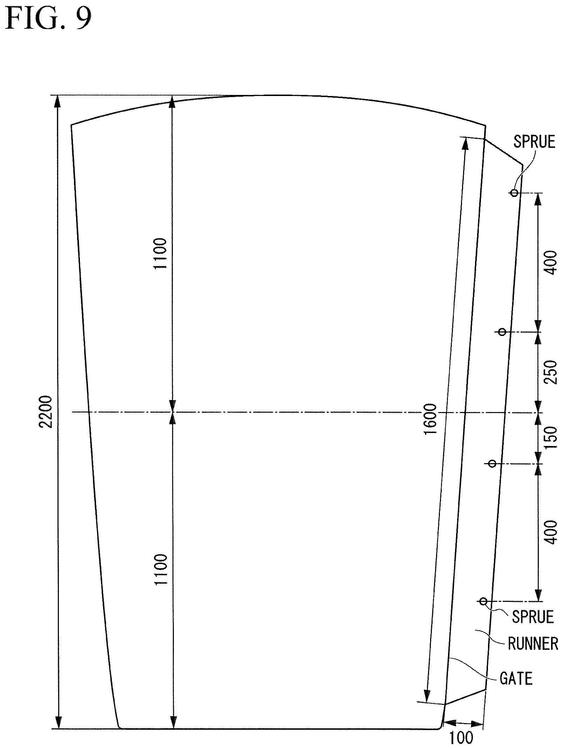

Car roofs shown in FIG. 8 were produced by injection-molding the obtained pellets. FIG. 8 shows a planar view and a side view of the car roof. FIG. 8(a) is the planar view, and FIG. 8(b) is the side view. The car roof corresponds to the outer plate of the present invention. The units of numerical values shown in the drawing are "mm".
Injection molding conditions are as described below. In addition, the location of a gate is as shown in FIG. 9 that corresponds to FIG. 8(a).

(Molded body)

Maximum projected area of molded body: 20,223 cm$^2$
Average thickness of molded body: 0.2 cm

(Molding conditions)

Molding machine: duo 3200 manufactured by Engel Coolers, screw diameter: 200 mm
Cylinder temperature: 350°C
Mold temperature: 110°C
Injection rate: 2,700 cm$^3$/s
Hot runner temperature: 350°C
Sprue shape: Valve gate, gate diameter φ: 8 mm
Number of sprues: Four
Gate shape: Wedge shape having a width that gradually decreases toward the gate in a cross section perpendicular to the extension direction of the runner
Gate thickness: 1.5 mm

The obtained molded bodies were evaluated as described below.

(Measurement of DTUL)

The pellet-shaped resin composition was dried and then injection-molded using a PS40E-5ASE-type injection molding machine manufactured by Nissei Plastic Industrial Co., Ltd., thereby obtaining a 127 mm-long, 12.7 mm-wide, and 6.4 mm-thick test specimen.
The deflection temperature under load of the obtained test specimen was measured according to ASTM D 648 at a load of 1.82 MPa.

[Evaluation of warping]

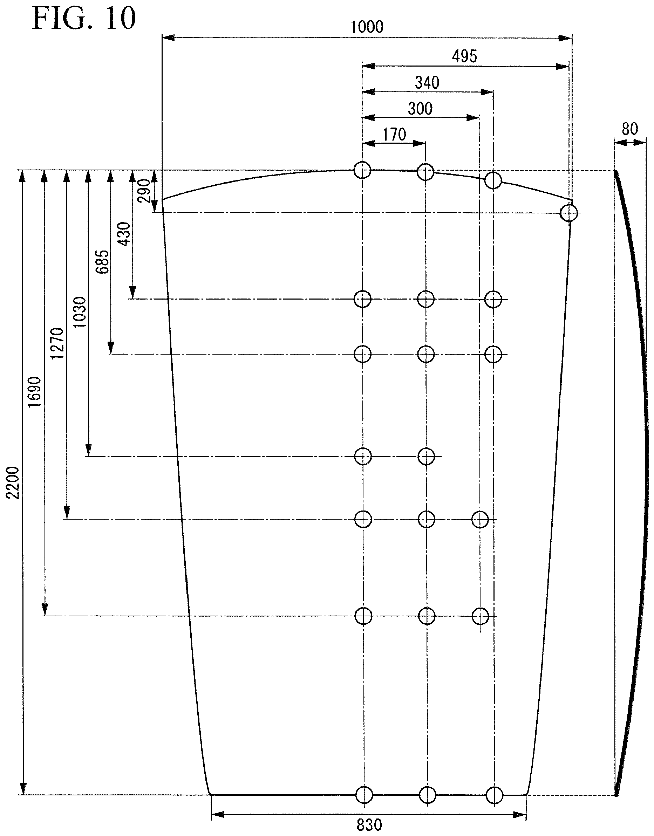

The molded body was placed on a flat plate with a convex portion facing upwards, the distances from the flat plate in a direction perpendicular to the flat plate were measured at 21 measurement points shown in FIG. 10, and differences from the design were computed. In a case where the location of the measurement point moved to the opposite side of the flat plate compared with the design, a positive value was given, and, in a case where the location moved to the flat plate side compared with the design, a negative value was given.

The maximum warping amount was defined as the difference between the largest value in the positive direction and the largest value in the negative direction. In a case where the molded body does not warp, that is, the molded body is molded as designed, the maximum warping amount is zero.

The evaluation results are shown in Table 2.

[Table 2]

|  | Example 1 | Example 2 | Comparative Example 1 |
|---|---|---|---|
| DTUL (°C) | 245 | 233 | 284 |
| Warping (mm) | - | 4.60 | Not moldable |

As a result of the evaluation, the following was found. When the compositions of Examples 1 and 2 were used, it was possible to favorably mold the roofs for a car. In addition, the values of the warping of the obtained molded bodies were also extremely small.

In contrast, when the composition of Comparative Example 1 was used, no roof for a car could be molded. In Table 2, this fact is expressed as "Not moldable". Specifically, when the composition of Comparative Example 1 was used, the fluidity of the molten resin composition was poor, the resin composition filled only part of the mold, and thus molding was not possible.

<Level 2>

(Examples 3 to 7 and Comparative Example 2)

Liquid crystal polymer resin compositions for an outer plate obtained by mixing the liquid crystal polyester, the plate-shaped filler, and the fibrous filler in proportions shown in Table 3 below were supplied to a co-rotating twin screw extruder having a screw diameter of 30 mm ("PCM-30HS" manufactured by Ikegai Corp) and pelletized by melting and kneading, thereby obtaining pellets of Examples 3 to 7 and Comparative Example 2. The units of numerical values in the table are "parts by mass".

The formulation of Example 3 is identical to that of Example 2, and the formulation of Comparative Example 2 is identical to that of Comparative Example 1.

[Table 3]

|  | Example 3 | Example 4 | Example 5 | Example 6 | Example 7 | Comparative Example 2 | Comparative Example 3 |
|---|---|---|---|---|---|---|---|
| Resin 1 (RB100) | 20 | 35 | 7 | 11 | 21 | - | - |
| Resin 2 (S6000) | 44 | 65 | 93 | 89 | 79 | 100 | 100 |
| Resin 3 (S7000) | 36 | - | - | - | - | - | - |
| Plate-shaped filler (mica) | 36 | 35 | 37 | 36 | 49 | - | - |
| Fibrous filler 1 (glass fiber) | 7 | - | 12 | 15 | - | 43 | 43 |
| Fibrous filler 2 (carbon fiber) | - | 10 | - | - | - | - | - |

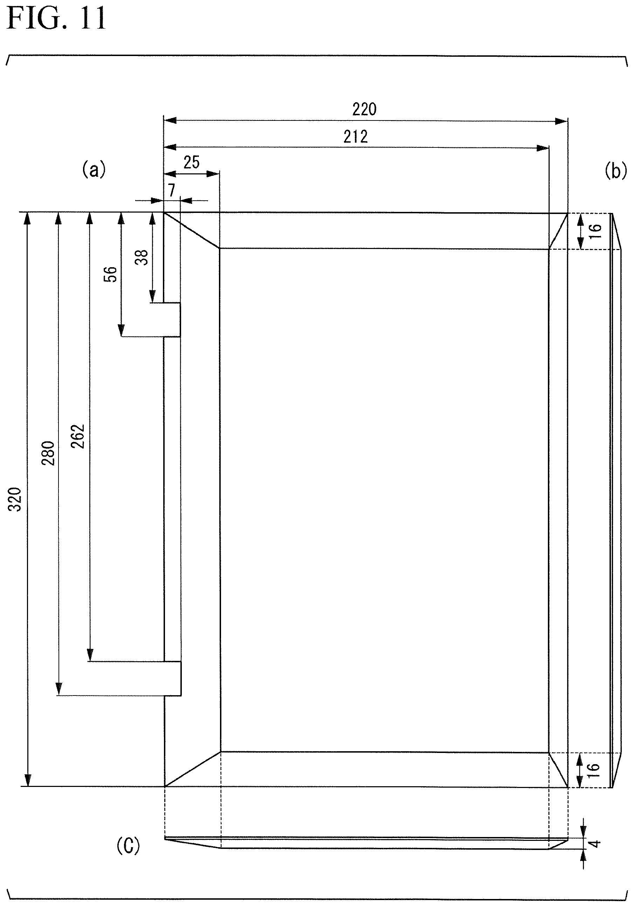

PC chassis shown in FIG. 11 were produced by injection-molding the obtained pellets. FIG. 11 is a trihedral figure of the PC chassis. FIG. 11(a) is a plan view, FIG. 11(b) is a front view, and FIG. 11(c) is a side view. The PC chassis corresponds to the outer plate in the present invention. The units of numerical values shown in the drawing are "mm".

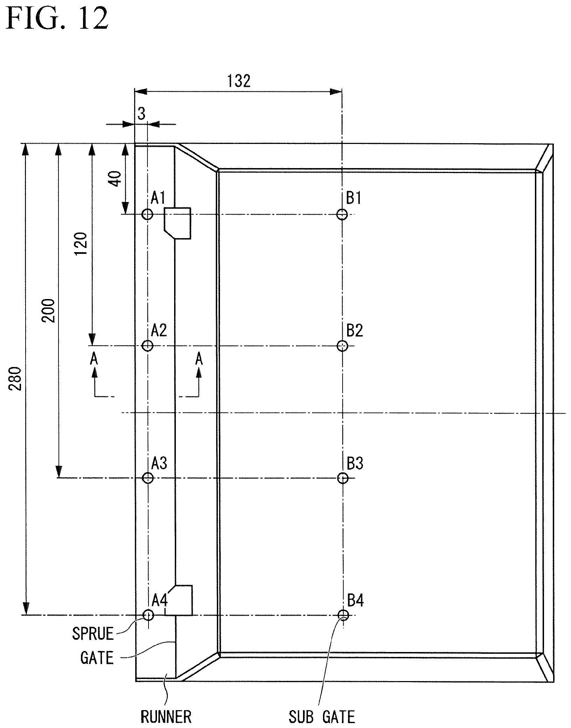

Injection molding conditions are as described below. In addition, the location of a gate is as shown in FIG. 12 that corresponds to FIG. 11(a).

(Molded body)

Maximum projected area of molded body: 699.6 cm$^2$
Average thickness of molded body: 0.05 cm

(Molding conditions)

Molding machine: J450AD-1400H manufactured by The Japan Steel Works, Ltd.
Cylinder temperature: 350°C
Mold temperature: 100°C
Injection rate: 500 cm$^3$/s
Hot runner temperature: 350°C
Sprue shape: Valve gate, diameter φ: 3 mm
Number of sprues: Four points (sprue locations A1 to A4 in FIG. 12)
Number of sub gates: Zero points in Examples 3 to 7 and Comparative Example 3
Four points (sub gate locations B1 to B4 in FIG. 12) in Comparative Example 2
Gate shape: Wedge shape having a width that gradually decreases toward the gate in a cross section perpendicular to the extension direction of the runner

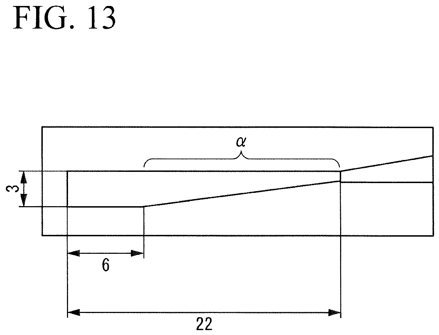

The gate shape is as shown in FIG. 13. FIG. 13 is an arrow cross-sectional view in a direction of a line A-A in FIG. 12. The units of numerical values shown in the drawing are "mm". In the drawing, a portion indicated by a reference sign α corresponds to the above-described "wedge-shaped portion".
The obtained molded bodies were evaluated as described below.

(Measurement of DTUL)

DTUL was measured using the above-described method.

(Evaluation of warping)

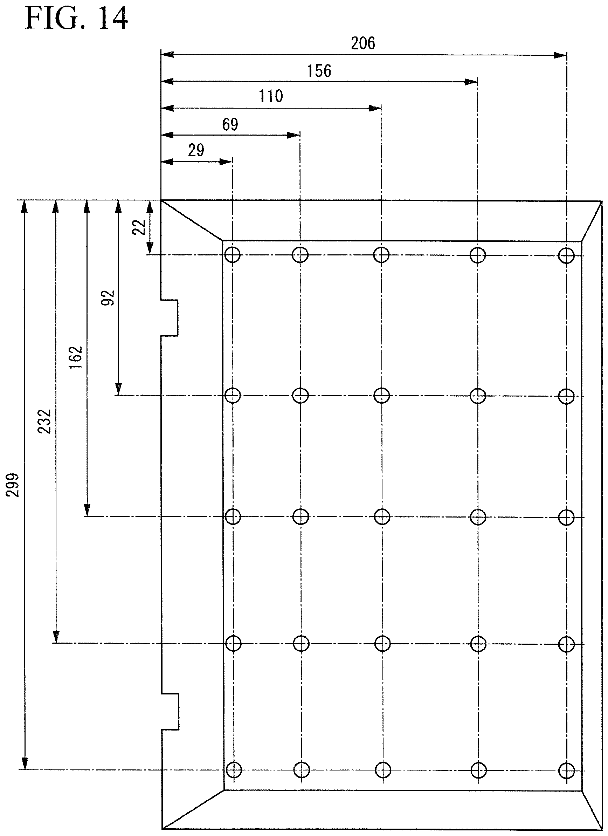

The molded body was placed on a flat plate with the bottom surface of the molded body facing the flat plate, and the heights in the thickness direction from the flat plate were measured at 25 measurement points shown in FIG. 14. The maximum warping amount of the molded body was defined as the difference between the largest value and the smallest value among the 25 points. The 25 measurement points are present in a planar portion of the molded body, and, in a case where the molded body does not warp, that is, the molded body is molded as designed, warping is zero.

(Evaluation of sound absorption effect)

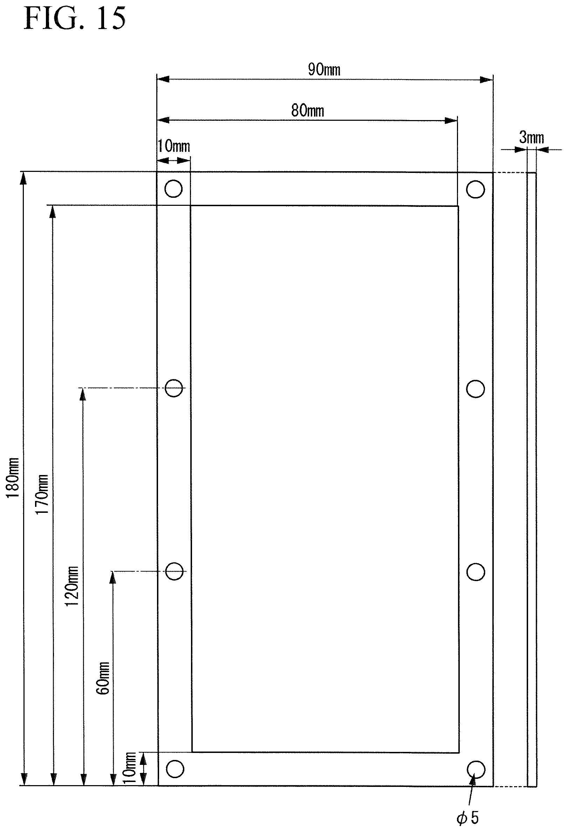

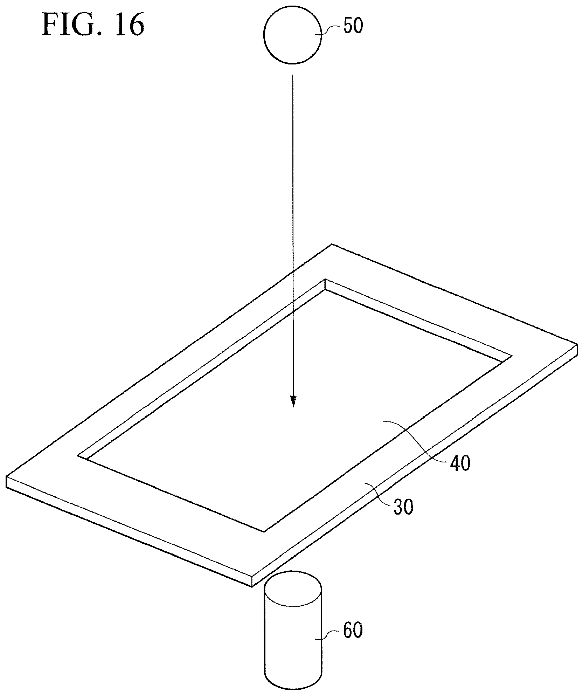

For the molded bodies of Examples 3 to 7, test specimens were produced by cutting out 18 cm×9 cm pieces from the flat portions of the PC chassis molded products. In addition, as a reference example, a test specimen was produced by cutting out a 18 cm×9 cm piece from a 0.05 mm-thick PET sheet.
The obtained test specimen was held using a pair of window frame-shaped jigs as shown in FIG. 15 and screwed using bolts and nuts. Through holes into which the bolts were to be inserted were opened in advance at eight places in the test specimen.
As shown in FIG. 16, a steel ball 50 (manufactured by Tsubaki Nakashima Co., Ltd., SUJ2, diameter φ: 6 mm) was dropped onto the center of a specimen 40 fixed using a jig 30 from a height of 77 cm, and sounds generated were collected using a sound collection microphone 60 installed at a location 6 cm below from the test specimen 40.
Sound pressures were collected at 51,200 measurement points for one second from the sound collection microphone 60 using a data logger, and a damped free vibration waveform was measured. The sound absorption effect was evaluated using a logarithm damping rate σ, and the average value of five times of evaluation was used. It is possible to evaluate the sound absorption effect superior as the value of σ increases.

$$\delta_1 = \ln(a_0/a_1)$$

$$\delta_2 = \ln(a_1/a_2)$$

$$\delta_3 = \ln(a_2/a_3)$$

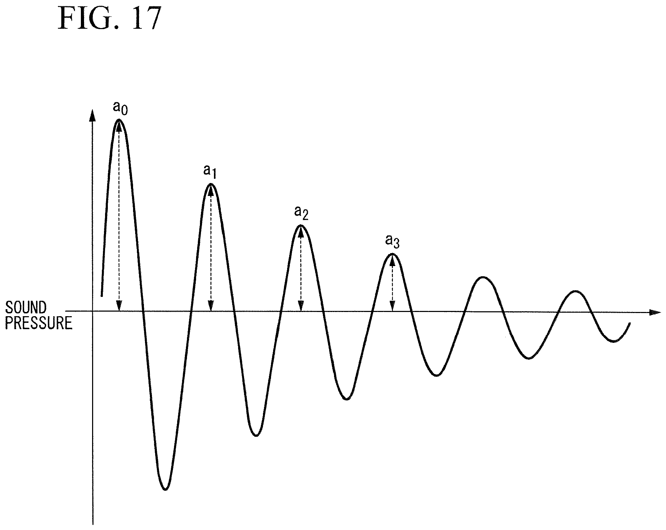

Here, $a_0$ to $a_3$ represent the amplitudes of a damped free vibration waveform shown in FIG. 17. In the drawing, the horizontal axis indicates the time, and the vertical axis indicates the sound pressure. The location of the origin corresponds to a point in time when the steel ball hit the test specimen.

The evaluation results are shown in Table 4.

As Comparative Example 3, an attempt was made to mold a resin composition having the same composition as in Comparative Example 2 using a mold including no sub gates, but the fluidity of the molten resin composition was poor, the resin composition filled only part of the mold, and thus "molding was not possible".

[Table 4]

| | Example 3 | Example 4 | Example 5 | Example 6 | Example 7 | Comparative Example 2 | Comparative Example 3 |
|---|---|---|---|---|---|---|---|
| DTUL (°C) | 233 | - | - | - | 254 | 284 | 284 |
| Gate location in PC chassis | End | End | End | End | End | End & center | End |
| Warping of PC chassis (mm) | 1.58 | 1.64 | 3.41 | 4.03 | 1.58 | 6.00 | Not moldable |
| $\delta_1 = \ln(a_0/a_1)$ | 1.00 | 0.88 | 0.92 | 0.87 | 0.68 | - | - |
| $\delta_2 = \ln(a_1/a_2)$ | 0.11 | 0.40 | 0.66 | 0.39 | 0.52 | - | - |
| $\delta_3 = \ln(a_2/a_3)$ | 0.39 | 0.80 | 0.6 | 0.32 | 0.41 | - | - |

[Table 5]

| | Reference Example |
|---|---|
| $\delta_1 = \ln(a_0/a_1)$ | 0.38 |
| $\delta_2 = \ln(a_1/a_2)$ | 0.45 |
| $\delta_3 = \ln(a_2/a_3)$ | 0.03 |

As a result of the evaluation, it was found that all of the compositions of Examples 3 to 7 and Comparative Example 2 enabled the molding of PC chassis, but the PC chassis molded using the compositions of Examples 3 to 7 warped to a smaller extent and were more favorable than the PC chassis molded using the composition of Comparative Example 2.

In addition, it was found that the molded bodies of Examples 3 to 7 has a smaller logarithm dampening rate $\delta$ and a superior sound absorption effect than those measured from a PET sheet as a reference example.

From the above-described results, it has been clarified that the present invention is useful.

Reference Signs List

100, 200 ··· MOLD, 110 ··· CAVITY, 120 ··· GATE, 130 ··· RUNNER, 140 ··· SPRUE, 150 ··· SUB GATE

**Claims**

1. A liquid crystal polymer resin composition for an outer plate, comprising:

a liquid crystal polymer; and a plate-shaped filler,
wherein an amount of the plate-shaped filler is 20 parts by mass or more and 70 parts by mass or less with respect to 100 parts by mass of the liquid crystal polymer.

2. The liquid crystal polymer resin composition for an outer plate according to Claim 1,
wherein the composition is used for an outer plate in which a projected area of a maximum surface is 400 cm$^2$ or more.

3. The liquid crystal polymer resin composition for an outer plate according to Claim 1 or 2,
wherein the composition is used for an outer plate in which an average thickness is 0.03 cm or more and 0.5 cm or less.

4. The liquid crystal polymer resin composition for an outer plate according to any one of Claims 1 to 3,
wherein the composition is used for an outer plate in which a ratio of a projected area of a maximum surface (unit: cm$^2$) to an average thickness (unit: cm) is 8,000 or more.

5. An outer plate that is an injection-molded body for which the liquid crystal polymer resin composition for an outer plate according to any one of Claims 1 to 4 is used as a forming material.

6. An outer plate comprising, as forming materials:

   a liquid crystal polymer; and
   a plate-shaped filler,
   wherein an amount of the plate-shaped filler is 20 parts by mass or more and 70 parts by mass or less with respect to 100 parts by mass of the liquid crystal polymer.

7. The outer plate according to Claim 6,
wherein a projected area of a maximum surface is 400 cm$^2$ or more.

8. The outer plate according to Claim 6 or 7,
wherein an average thickness is 0.03 cm or more and 0.5 cm or less.

9. The outer plate according to any one of Claims 6 to 8,
wherein a ratio of a projected area of a maximum surface (unit: cm$^2$) to an average thickness (unit: cm) is 8,000 or more.

10. The outer plate according to any one of Claims 5 to 9,
wherein the outer plate is a vehicle exterior component.

11. The outer plate according to Claim 10,
wherein the vehicle exterior component is a car roof component.

FIG. 1

FIG. 2

# FIG. 3

FIG. 4

FIG. 5

## FIG. 6

## FIG. 7

# FIG. 8

(a)

(b)

1100

80

2200

830

FIG. 9

FIG. 10

# FIG. 11

## FIG. 12

FIG. 13

FIG. 14

# FIG. 15

FIG. 16

FIG. 17

**EP 3 556 807 A1**

## INTERNATIONAL SEARCH REPORT

International application No.

PCT/JP2017/044880

### A. CLASSIFICATION OF SUBJECT MATTER

Int.Cl. C08L67/00(2006.01)i, B29C45/00(2006.01)i, B29C45/27(2006.01)i, B62D25/02(2006.01)i, B62D25/06(2006.01)i, C08K7/00(2006.01)i, C08L67/03(2006.01)i

According to International Patent Classification (IPC) or to both national classification and IPC

### B. FIELDS SEARCHED

Minimum documentation searched (classification system followed by classification symbols)

Int.Cl. C08L67/00, B29C45/00, B29C45/27, B62D25/02, B62D25/06, C08K7/00, C08L67/03

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-190461 A (SUMITOMO CHEMICAL CO., LTD.) 29 September 2011, claim 1, paragraphs [0038], [0046], [0047], table 1 (Family: none) | 1–11 |
| X | WO 2013/128887 A1 (TORAY INDUSTRIES, INC.) 06 September 2013, claim 1, paragraphs [0084], [0128]–[0131], table 2 & US 2015/0038631 A1, claim 1, paragraphs [0084], [0129]–[0132], table 2 & EP 2821438 A1 & CN 104144981 A & KR 10-2014-0135953 A | 1–11 |
| A | WO 2003/022926 A1 (ASAHI KASEI CORPORATION) 20 March 2003, table 1 & US 2004/0232717 A1, table 1 | 1–11 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 February 2018 (20.02.2018) | 06 March 2018 (06.03.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016243452 A

- JP H07126383 B

**Non-patent literature cited in the description**

- Synthesis, molding, and application of liquid crystal polymers. Koide Naoyuki's. CMC Publishing Co., Ltd, 05 June 1987, 95